# EUROPÄISCHE PATENTSCHRIFT

(11) **EP 1 821 132 B1**
(45) Veröffentlichungstag und Bekanntmachung des Hinweises auf die Patenterteilung: **17.09.2008**
(21) Anmeldenummer: 07450013.3
(22) Anmeldetag: 29.01.2007
(51) Int. Cl.: G02C 5/22

(54) **Federscharnier für eine Brille**
Spring hinge for spectacles
Charnière à ressort pour lunettes

(30) Priorität: 17.02.2006 AT 2582006
(43) Veröffentlichungstag der Anmeldung: 22.08.2007
(73) Patentinhaber: Redtenbacher Präzisionsteile Ges. M.B.H., 4644 Scharnstein (AT)
(72) Erfinder: Buchegger, Harald, 4817 St. Konrad (AT)
(74) Vertreter: Hübscher, Helmut

(56) Entgegenhaltungen:
- WO-A-00/63739
- WO-A-01/31386
- WO-A-20/05111699
- FR-A1- 2 275 791
- GB-A- 2 266 783

## Beschreibung

Die Erfindung bezieht sich auf ein Federscharnier für eine Brille mit einem in einem bügelseitigen Gehäuse in Bügellängsrichtung verschiebbar geführten Scharnierteil und mit einem vom Scharnierteil in Verschieberichtung abstehenden, in eine Gehäuseausnehmung eingreifenden, U-förmigen Gleitstück, das zwischen seinen beiden Schenkeln eine Schraubenfeder aufnimmt, die sich mit ihrem scharnierseitigen Ende an einem dem Gehäuse zugehörigen Widerlager und mit ihrem gegenüberliegenden Ende am die beiden Schenkel des U-förmigen Gleitstückes verbindenden Steg abstützt, wobei der Scharnierteil mit dem Gleitstück eine in Längsrichtung der Schraubenfeder verlaufende Durchtrittsöffnung aufweist.

Bei Federscharnieren dieser Art ist es bekannt (EP 1 335 236 A1), den zwei Scharnierlappen umfassenden Scharnierteil mit dem Gleitstück als einen U-förmigen Bügel auszubilden, der in einer Gehäuseausnehmung in Längsrichtung verschiebbar geführt ist. Dieser U-förmige Bügel der an seinen freien Schenkelenden die beiden Scharnierlappen trägt, nimmt zwischen seinen Schenkeln eine Schraubenfeder auf, die sich einerseits am die beiden Schenkel miteinander verbindenden Steg des Bügels und anderseits an einem Widerlager abstützt, das von einem Gehäuseboden aufragt und zwischen die Bügelschenkel ragt, so daß der anschlagbegrenzt in der Gehäuseausnehmung gehaltene Bügel nur gegen die Rückstellkraft der Schraubenfeder aus der Anschlagstellung verlagert werden kann. Das aus zwei parallelen Schenkeln gebildete Gleitstück des Scharnierteils stellt eine vorteilhafte Voraussetzung für eine spielfreie und verdrehsichere Verschiebeführung dar, allerdings mit dem Nachteil, daß die Montage des Federscharniers nicht in Verschieberichtung des Scharnierteils, sondern quer dazu erfolgen muß, weil der U-förmige Bügel mit seinem Steg das vom Gehäuseboden aufragende Widerlager umschließen muß. Aus diesem Grund ist das Gehäuse im dem Gehäuseboden gegenüberliegenden Bereich offen ausgebildet, um den U-förmigen Bügel durch diese Gehäuseöffnung senkrecht zur Bügelebene in die Gehäuseausnehmung einsetzten zu können. Die für die Montage des Federscharniers erforderliche Gehäuseöffnung ist mit einem Gehäusedeckel zu verschließen, der nicht nur den Konstruktionsaufwand vergrößert, sondern auch Führungsaufgaben für den U-förmigen Bügel übernehmen muß, so daß die Führungsbedingungen von den jeweiligen Befestigungsverhältnissen des Deckels abhängen.

Um das Widerlager für die Schraubenfeder nicht quer zur Längsrichtung der Schraubenfeder in das Gehäuse einsetzen zu müssen, ist es darüber hinaus bekannt (EP 0 632 306 A1), die Schenkel des/U-förmigen Gleitstückes zu Scharnierlappen zu verlängern, um zwischen diesen Scharnierlappen das Widerlager in Längsrichtung der Schraubenfeder in das Gehäuse einführen zu können. Zur Verrastung des Widerlagers mit dem Gehäuse ist allerdings wiederum eine Querverlagerung des Widerlagers erforderlich, was die Konstruktion aufwendig macht, zumal das Widerlager nach seiner Querverlagerung durch einen Quersteg zwischen den Schenkeln des Gleitstückes gesichert werden muß. Zur federnden Verrastung eines Brillenbügels in seiner Gebrauchsstellung ist es außerdem bekannt (WO 00/63739 A1), in einem das Lager für den Brillenbügel bildenden Gehäuse eine Feder vorzusehen, die die Stirnseite des Bügels über einen Druckstempel beaufschlagt, der begrenzt axial verschiebbar im Gehäuse gehalten wird. Ein Ausstoßen des Druckstempels aus dem Gehäuse durch die Schraubenfeder wird durch eine Spreizhülse verhindert, die mit Hilfe des Druckstempels radial erweitert werden kann und dabei eine Hinterschneidung des Gehäuses mit einer Ringschulter hintergreift.

Schließlich ist es bekannt (WO 2005/111699 A1), ein T-förmiges Gleitstück für ein Federscharnier einzusetzen, wobei beidseits des Gleitstückes je eine Schraubenfeder vorgesehen ist, die sich am Quersteg des Gleitstückes abstützt. Die Federabstützung gegenüber dem das Gleitstück aufnehmenden Gehäuse erfolgt über Widerlager, die in koaxial zu den Schraubenfedern verlaufende Muttergewinde des Gehäuses eingesetzt werden. Dies ist möglich, weil die Widerlager seitlich des Scharniergelenkes zugänglich sind.

Der Erfindung liegt somit die Aufgabe zugrunde, ein Federscharnier für eine Brille der eingangs geschilderten Art so zu verbessern, daß nicht nur einfache Montagebedingungen, sondern auch ein geringer Konstruktionsaufwand sichergestellt werden können, ohne auf eine gute Führung des Scharnierteiles verzichten zu müssen.

Die Erfindung löst die gestellte Aufgabe dadurch, daß das Widerlager durch die koaxial zur Schraubenfeder verlaufende Durchtrittsöffnung des Scharnierteils in ein zur Schraubenfeder koaxiales Muttergewinde des Gehäuses eingeschraubt ist.

Da zufolge dieser Maßnahmen das Widerlager zur scharnierseitigen Abstützung der Schraubenfeder von der Scharnierseite her koaxial zur Schraubenfeder in das Gehäuse eingeschraubt werden kann, nachdem der Scharnierteil in axialer Richtung in die Gehäuseausnehmung eingesetzt wurde, kann in vorteilhafter Weise ein in Umfangsrichtung geschlossenes Gehäuse zum Einsatz kommen. Es muß lediglich bedacht werden, daß der die beiden Schenkel des U-förmigen Gleitstückes verbindende Steg, der quer zur Achse des Muttergewindes verläuft, das Gewindeloch für das Muttergewinde durchsetzen kann. Das Gewindeloch des Muttergewindes muß somit gegen die Schenkel des Gleitstückes hin offen ausgebildet sein und kann nur zwischen den Führungsabschnitten der Gehäuseausnehmung für die Schenkel Gewindesegmente aufweisen. Damit das scharnierseitige Widerlager für die Schraubenfeder von der Scharnierseite her durch den im Gehäuse verschiebbar geführten Scharnierteil in das von der Stirnseite des Gehäuses her zugängliche Muttergewinde eingeschraubt werden kann und das eingeschraubte Widerlager die Verlagerung des Gleitstückes entgegen der Rückstellkraft der Schraubenfeder nicht behindert, sind der Scharnierteil und sein Gleitstück mit einer zur Schraubenfeder koaxialen Durchtrittsöffnung zu versehen, die das Widerlager mit Spiel aufnimmt, so daß das Widerlager durch diese Durchtrittsöffnung in das Muttergewinde eingeschraubt bzw. in dieser Durchtrittsöffnung relativ zum Gleitstück axial verlagert werden kann.

Um die Schraubenfeder zwischen den beiden Schenkeln des Gleitstückes zusätzlich führen zu können, kann das gehäuseseitige Widerlager für die Schraubenfeder aus einem in das Muttergewinde des Gehäuses eingreifenden Gewindekopf und aus einem vom Gewindekopf abstehenden Führungsbolzen zur Aufnahme der Schraubenfeder bestehen. Der Führungsbolzen ergibt außerdem eine Montagehilfe, weil die auf den Führungsbolzen aufgesteckte Schraubenfeder mit dem Widerlager durch die Durchtrittsöffnung zwischen die Schenkel des in die Gehäuseausnehmung eingesetzten Scharnierteils eingeführt und mit dem Einschrauben des Gewindekopfes des Widerlagers in das Muttergewinde des Gehäuses festgelegt werden kann.

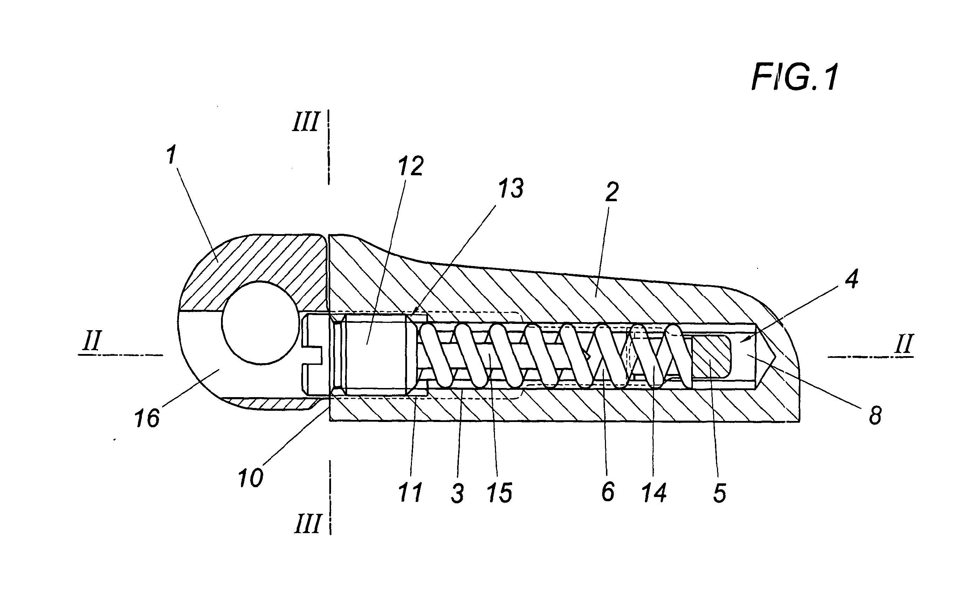

In der Zeichnung ist der Erfindungsgegenstand beispielsweise dargestellt. Es zeigen
- Fig. 1: ein erfindungsgemäßes Federscharnier für eine Brille in einem vereinfachten Längsschnitt senkrecht zur Scharnierachse,

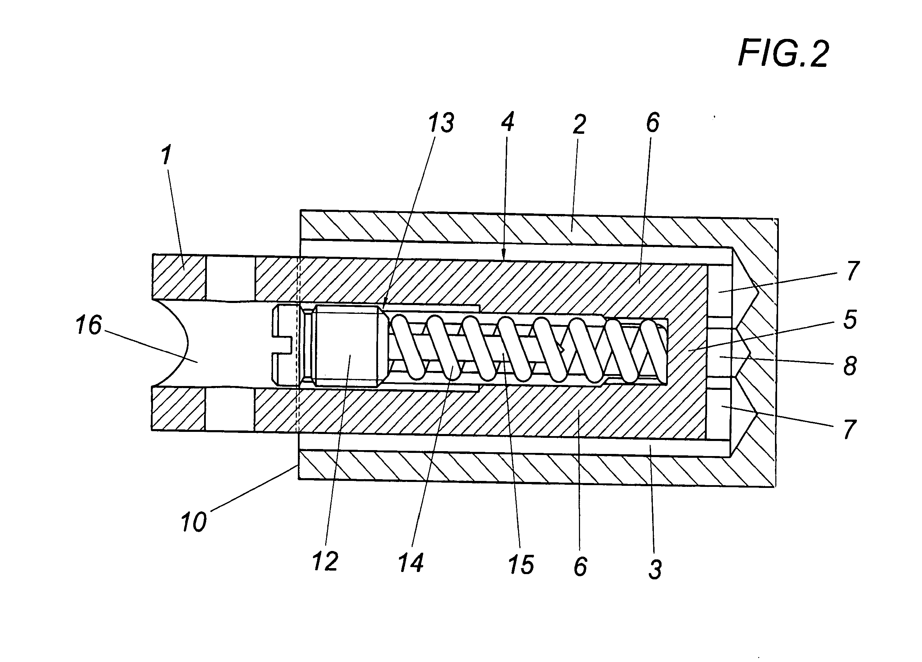

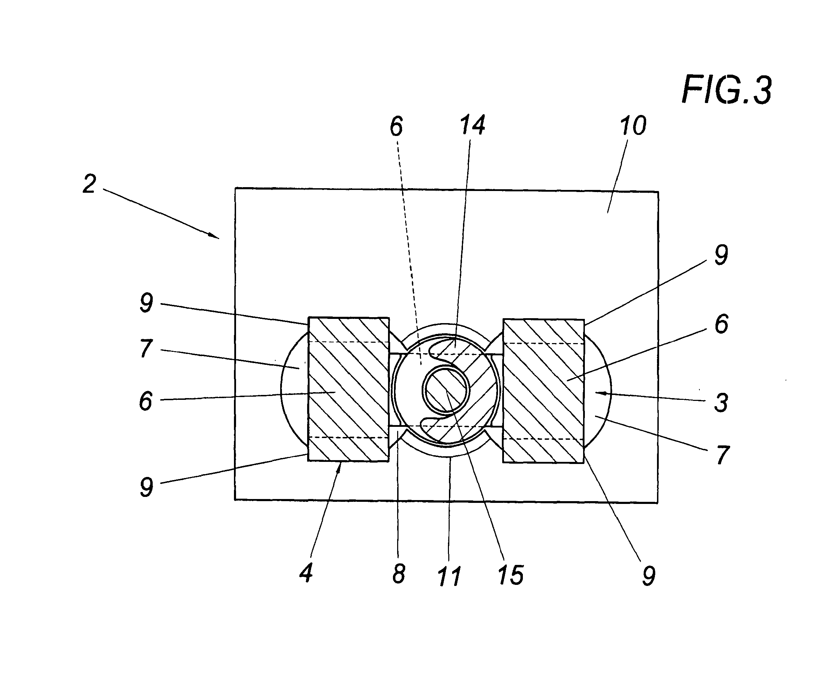

- Fig. 2: dieses Federscharnier in einem Schnitt nach der Linie II - II der Fig. 1 und Fig. 3 einen Schnitt nach der Linie III - III der Fig. 1 in einem größeren Maßstab.

Ein erfindungsgemäßes Federscharnier für eine Brille weist gemäß dem dargestellten Ausführungsbeispiel zwei durch eine Scharnierachse miteinander verbundene Scharnierteile auf, von denen ein Scharnierteil an einem Bügelbacken befestigt ist, während der andere Scharnierteil 1 verschiebbar in einem an einem Brillenbügel befestigten Gehäuse 2 gelagert ist. Zu diesem Zweck ist der Scharnierteil 1, der einen mittleren Scharnierlappen mit einem Lagerauge für die Scharnierachse bildet, mit einem in eine Gehäuseausnehmung 3 eingreifenden Gleitstück 4 versehen, das U-förmig ausgebildet ist und zwei parallele, durch einen Steg 5 miteinander verbundene Schenkel 6 aufweist. Die Gehäuseausnehmung 3 zur verschiebbaren Führung des Gleitstückes 4 setzt sich aus zwei seitlichen Führungsabschnitten 7 für die beiden Schenkel 6 und einer die beiden Führungsabschnitte 7 verbindenden Öffnung 8 für den Steg 5 zusammen. Aus Gründen der einfachen Herstellung werden sowohl die Führungsabschnitte 7 als auch die Verbindungsöffnung 8 durch einander im Querschnitt überschneidende Bohrungen gebildet, die allerdings im Bereich der Führungsabschnitte 7 Führungsaussparungen 9 zur drehsicheren Aufnahme der im Querschnitt rechteckigen Schenkel 6 aufweisen.

Die Bohrung für die Verbindungsöffnung 8 ist im Bereich der Gehäusestirnseite 10 mit einem Muttergewinde 11 versehen, in das ein Gewindekopf 12 eines Widerlagers 13 für eine Schraubenfeder 14 eingeschraubt wird, die zwischen den Schenkeln 6 des Gleitstückes 4 zu liegen kommt und sich mit ihrem dem Widerlager 13 gegenüberliegenden Ende am Steg 5 des Gleitstückes 4 abstützt. Zur Führung dieser Schraubfeder 14 ist der Gewindekopf 12 des Widerlagers 13 mit einem axial abstehenden Führungsbolzen 15 versehen, der von der Schraubenfeder 14 umschlossen wird. Damit das Widerlager 13 in axialer Richtung durch den Scharnierteil 1 in das Muttergewinde 11 eingeschraubt werden kann, ist im Scharnierteil eine zum Muttergewinde 11 koaxiale Durchtrittsöffnung 16 vorgesehen, die sich in den axialen Bereich der Schenkel 6 des Gleitstückes 4 hinein erstreckt und einen größeren Innendurchmesser als der Außendurchmesser des Gewindekopfes 12 des Widerlagers 13 hat. Durch diese Maßnahme ist es möglich, das Widerlager 13 durch die Durchtrittsöffnung 16 des Scharnierteiles 1 hindurch in das Muttergewinde 11 des Gehäuses 2 einzuschrauben. Außerdem behindert das eingeschraubte Widerlager 13 die Verschiebung des Gleitstückes in der Gehäuseausnehmung 3 nicht.

Zum Montieren des Federscharniers wird zunächst der Scharnierteil 1 mit dem Gleitstück 4 von der Stirnseite 10 des Gehäuses 2 her in die Gehäuseausnehmung 3 eingeschoben. Danach kann die Schraubenfeder 14 auf den Führungsbolzen 15 des Widerlagers 13 aufgeschoben werden, um die Schraubenfeder 14 zusammen mit dem Widerlager 13 durch die Durchtrittsöffnung 16 des Scharnierteiles 1 in das Muttergewinde 11 des Gehäuses 2 einzuschrauben. Mit dem Einschrauben des Gewindekopfes 12 des Widerlagers 13 in das Muttergewinde 11 ist die Montage abgeschlossen. Die zwischen dem Gewindekopf 12 des Widerlagers 13 und dem Steg 5 des Gleitstückes 4 eingespannte Schraubenfeder 14 beaufschlagt das Gleitstück 4 im Sinne eines Einziehens in die Gehäuseausnehmung 3, so daß der Scharnierteil 1 nur gegen die Rückstellkraft der Schraubenfeder 14 im Ausziehsinn gegenüber dem Gehäuse 2 verlagert werden kann.

## Patentansprüche

1. Federscharnier für eine Brille mit einem in einem bügelseitigen Gehäuse (2) in Bügellängsrichtung verschiebbar geführten Scharnierteil (1) und mit einem vom Scharnierteil (1) in Verschieberichtung abstehenden, in eine Gehäuseausnehmung (3) eingreifenden, U-förmigen Gleitstück (4), das zwischen seinen beiden Schenkeln (6) eine Schraubenfeder (14) aufnimmt, die sich mit ihrem scharnierseitigen Ende an einem dem Gehäuse (2) zugehörigen Widerlager (13) und mit ihrem gegenüberliegenden Ende am die beiden Schenkel (6) des U-förmigen Gleitstückes (4) verbindenden Steg (5) abstützt, wobei der Scharnierteil (1) mit dem Gleitstück (4) eine in Längsrichtung der Schraubenfeder (14) verlaufende Durchtrittsöffnung (16) aufweist, **dadurch gekennzeichnet, daß** das Widerlager (13) durch die koaxial zur Schraubenfeder (14) verlaufende Durchtrittsöffnung (16) des Scharnierteils (1) in ein zur Schraubenfeder (14) koaxiales Muttergewinde (11) des Gehäuses (2) eingeschraubt ist.

2. Federscharnier nach Anspruch 1, **dadurch gekennzeichnet, daß** das gehäuseseitige Widerlager (13) für die Schraubenfeder (14) aus einem in das Muttergewinde (11) des Gehäuses (2) eingreifenden Gewindekopf (12) und aus einem vom Gewindekopf (12) abstehenden Führungsbolzen (15) zur Aufnahme der Schraubenfeder (14) besteht.

## Claims

1. Spring hinge for spectacles having a hinge part (1) guided displaceably in a side piece-side housing (2) in the longitudinal direction of the side piece, and having a U-shaped sliding piece (4) which projects from the hinge part (1) in the displacement direction, engages in a housing recess (3) and receives a helical spring (14) between its two limbs (6), which helical spring is supported with its hinge-side end on a counterbearing (13) appertaining to the housing (2) and with its opposite end on the web (5) connecting the two limbs (6) of the U-shaped sliding piece (4), wherein the hinge part (1) with the sliding piece (4) has a through opening (16) extending in the longitudinal direction of the helical spring (14), **characterised in that** the counterbearing (13) is screwed through the through opening (16) of the hinge part (1), which extends coaxially to the helical spring (14), into a nut thread (11) of the housing (2), which is coaxial to the helical spring (14).

2. Spring hinge as claimed in claim 1, **characterised in that** the housing-side counterbearing (13) for the helical spring (14) consists of a threaded head (12) engaging in the nut thread (11) of the housing (2) and of a guide pin (15), protruding from the threaded head (12), for reception of the helical spring (14).

## Revendications

1. Charnière à ressort pour lunettes, avec une partie de charnière (1), guidée de façon déplaçable dans la direction longitudinale de branche, dans un boîtier (2) situé côté branche, et avec une pièce de glissement (4) en forme de U, s'engageant dans un évidement (3) de boîtier, faisant saillie de la partie de charnière (1) dans la direction de déplacement, la pièce de glissement recevant, entre ses deux ailes (6), un ressort hélicoïdal (14) prenant appui, par son extrémité située côté charnière, sur un contre-palier (13) appartenant au boîtier (2) et, par son extrémité opposée, sur une nervure (5) reliant les deux ailes (6) de la pièce de glissement (4) en forme de U, la partie de charnière (1) présentant, avec la pièce de glissement (4), une ouverture de passage (16) s'étendant dans la direction longitudinale du ressort hélicoïdal (14), **caractérisée en ce que** le contre-palier (13), passant dans l'ouverture de passage (16), s'étendant coaxialement au ressort hélicoïdal (14), de la partie de charnière (1) est vissé dans un taraudage d'écrou (11), coaxial au ressort hélicoïdal (14), du boîtier (2).

2. Charnière à ressort pour lunettes selon la revendication 1, **caractérisée en ce que** le contre-palier (13), situé côté boîtier, pour le ressort hélicoïdal (14) est composé d'une tête filetée (12) s'engageant dans le taraudage d'écrou (11) du boîtier (2), et d'un boulon de guidage (15), faisant saillie de la tête filetée (12), pour recevoir le ressort hélicoïdal (14).
